# EUROPÄISCHE PATENTSCHRIFT

(11) **EP 3 613 324 B1**
(45) Veröffentlichungstag und Bekanntmachung des Hinweises auf die Patenterteilung: **31.03.2021**
(21) Anmeldenummer: 19191899.4
(22) Anmeldetag: 15.08.2019
(51) Int. Cl.: A47L 15/00, A47L 15/46, G07G 1/00, A47F 10/06, G06Q 10/08

(54) **VERFAHREN ZUM BETREIBEN EINER GESCHIRRSPÜLMASCHINE IN EINEM GASTRONOMIEBETRIEB**
METHOD FOR OPERATING A DISHWASHER IN A GASTRONOMIC FACILITY
PROCÉDÉ DE FONCTIONNEMENT D'UN LAVE-VAISSELLE DANS UNE SOCIÉTÉ GASTRONOMIQUE

(30) Priorität: 23.08.2018 DE 102018120667
(43) Veröffentlichungstag der Anmeldung: 26.02.2020
(73) Patentinhaber: Shop-IQ GmbH & Co. KG, 97421 Schweinfurt (DE)
(72) Erfinder: LEPPIG, Joachim, 97421 Schweinfurt (DE)
(74) Vertreter: Gosdin, Carstensen & Partner Patentanwälte Partnerschaftgesellschaft mbB

(56) Entgegenhaltungen:
- WO-A1-2018/034252
- DE-A1- 4 321 962
- DE-A1- 4 437 087
- DE-A1-102008 057 178
- DE-U1- 29 614 650
- JP-A- H1 063 927
- JP-U- H 079 826
- US-A- 5 876 515

## Beschreibung

Die Erfindung betrifft ein Verfahren zum Betreiben einer Geschirrspülmaschine in einem Gastronomiebetrieb.

In einem Gastronomiebetrieb fällt während der Geschäftstätigkeit schmutziges Geschirr an, welches von einer Geschirrspülmaschine gereinigt werden muss. Im Rahmen der vorliegenden Erfindung ist unter einem Gastronomiebetrieb jede Art von Bewirtung zu verstehen, worunter insbesondere Cafes, Bistros, Bäckereigeschäfte oder Imbisse zu verstehen sind.

Zur Reinigung des schmutzigen Geschirrs steht eine Geschirrspülmaschine zur Verfügung. Sobald diese hinreichend gefüllt ist, wird sie vom Personal in Gang gesetzt, um das Geschirr zu säubern.

Dabei ist es mitunter für das Personal schwierig, den richtigen Zeitpunkt zur Aktivierung der Geschirrspülmaschine abzupassen, da dem Einschalten der Maschinen zwecks Säuberung des Geschirrs nicht immer die notwendige Aufmerksamkeit gewidmet wird. Häufig wird in einem zu frühen Stadium die Geschirrspülmaschine aktiviert, sodass Reinigungskapazität der Maschine nicht genutzt wird; mitunter wird aber auch die Maschine zu spät aktiviert, wenn bereits Bedarf an frischem Geschirr besteht.

Die DE 43 21 962 A1 offenbart ein Verfahren, bei dem jedes Geschirr- bzw. Besteckteil mit einem Elektronikchip versehen wird, welcher eine Kodierung trägt, die zur Steuerung auch des Geschirrspülvorgangs genutzt wird. Die US 5 876 515 A beschreibt die Steuerung einer Spülmaschine in Abhängigkeit des Anfalls an zu reinigenden Gegenständen. Weitere Lösungen zeigen die WO 2018/034252 A1**,** die JP H10 63927 A**,** die DE 44 37 087 A1**,** die JP H07 9826 U**,** die DE 10 2008 057 178 A1 und die DE 296 14 650 U1**.**

Der Erfindung liegt die **Aufgabe** zugrunde, ein gattungsgemäßes Verfahren so fortzubilden, dass in einfacher und effizienter Weise stets sauberes Geschirr für den Gastronomiebetrieb zur Verfügung steht, wobei insbesondere auch ein energieoptimierter und damit kostengünstiger Betrieb angestrebt wird.

Die **Lösung** dieser Aufgabe ist durch das Verfahren gemäß Anspruch 1 gegeben, wobei das Verfahren die folgenden Schritte aufweist:
a) Erfassung der im Gastronomiebetrieb verkauften Positionen über ein Kassensystem;
b) Zuordnung des für die verkauften Positionen erforderlichen Geschirrs;
c) Aktivierung der Geschirrspülmaschine mittels einer Steuereinrichtung, sobald sich ab einem Referenzzeitpunkt infolge der verkauften Positionen und des damit verbundenen Anfalls an Geschirr eine vorgegebene Menge an Geschirr ergeben hat.

Die Aktivierung der Geschirrspülmaschine gemäß obigem Schritt c) kann dabei die Auslösung eines Signals umfassen. Mit einem solchen Signal kann das Personal darauf hingewiesen werden, dass nunmehr der richtige Zeitpunkt zum Start der Geschirrspülmaschine vorliegt, sodass das Personal dies veranlassen kann.

Die Aktivierung der Geschirrspülmaschine gemäß obigem Schritt c) kann aber auch die Auslösung des Starts der Geschirrspülmaschine umfassen; hiernach wäre ein automatisierter direkter Start der Maschine zum entsprechenden Zeitpunkt vorgesehen, ohne dass das Personal hierzu einen Beitrag leisten muss.

Um besonders energieeffizient zu arbeiten und insbesondere die für den Gastronomiebetrieb zur Verfügung stehende maximale elektrische Anschlussleistung nicht zu übersteigen, sieht eine Fortbildung der Erfindung vor, dass die Aktivierung der Geschirrspülmaschine gemäß obigem Schritt c) die Unterschritte umfasst:
cl) Aufheizen der Geschirrspülmaschine vor dem Start der Geschirrspülmaschine, sobald ein vorgegebener Prozentsatz der vorgegebenen Menge an Geschirr erreicht ist;
c2) Aktivierung der Geschirrspülmaschine nach obigem Schritt c).

Der vorgegebene Prozentsatz liegt dabei bevorzugt zwischen 75 % und 95 % der vorgegebenen Menge an Geschirr.

Die Durchführung des genannten Schritts c1) kann dabei abhängig davon erfolgen, ob die vom Gastronomiebetrieb abgerufene elektrische Anschlussleistung unterhalb eines vorgegebenen Niveaus liegt.

Hiernach ist also vorgesehen, dass ein aktueller elektrischer Anschlusswert des Gastronomiebetriebs, der unterhalb des vom Energieversorger bestellten maximalen elektrischen Anschlusswerts liegt, genutzt wird, um die Geschirrspülmaschine vorzubereiten bzw. aufzuheizen. Damit kann gegebenenfalls das Überschreiten eines bestellten maximalen elektrischen Anschlusswertes im späteren Betrieb der Geschirrspülmaschine vermieden werden, was Kosten spart.

Eine andere Fortbildung sieht vor, dass die Aktivierung der Geschirrspülmaschine gemäß obigem Schritt c) die Auswahl und Vorgabe eines definierten Spülprogramms umfasst. Dabei kann das Spülprogramm insbesondere von der Steuereinrichtung ausgewählt werden, wobei das erfasste zu spülende Geschirr zugrunde gelegt wird. Durch die erfassten verkauften Positionen (s. obigen Schritt a) liegt nicht nur die Menge des anfallenden Geschirrs, sondern auch deren Art fest. Werden beispielsweise verstärkt Torten konsumiert, führt das zu einem höheren Verschmutzungsgrad des Geschirrs als beispielsweise im Falle von Erfrischungsgetränken. Da die entsprechenden Daten vorliegen, kann somit die Steuerung ein solches Spielprogramm auswählen, welches einerseits für hinreichende Spülung sorgt, andererseits allerdings möglichst wenig Energie benötigt.

Insgesamt ergibt sich somit ein optimierter Betrieb der Geschirrspülmaschine, da diese stets mit optimaler Beladung betrieben wird. Weiterhin kann erreicht werden, dass eine Vergleichmäßigung des Energieverbrauchs stattfindet, sodass der maximal gebuchte elektrische Anschlusswert nicht überschritten wird.

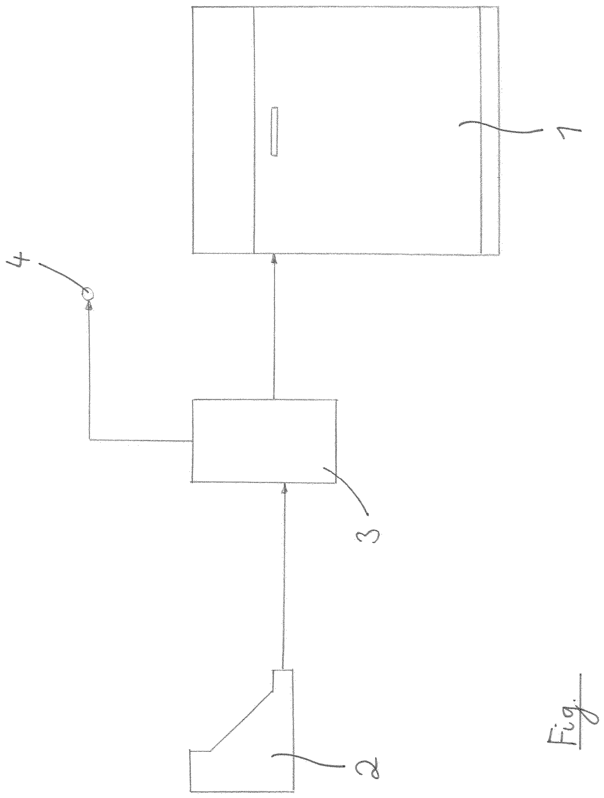

In der Figur ist ein Ausführungsbeispiel der Erfindung dargestellt. Die Figur zeigt einige Elemente eines Gastronomiebetriebs.

In der Figur ist nur sehr schematisch ein Bistro angedeutet. Dargestellt sind eine Geschirrspülmaschine, die zum Waschen benutzten Geschirr benutzt wird, sowie ein Kassensystem 2, mit dem die im Gastronomiebetrieb verkauften Positionen erfasst.

Sowohl die Geschirrspülmaschine 1 als auch das Kassensystem 2 stehen mit einer Steuereinrichtung 3 in Verbindung.

Wird über das Kassensystem 2 ab einem Referenzzeitpunkt ("Reset" nach Entleeren der Geschirrspülmaschine nach deren letzten Lauf) erfasst, welche Produkte verkauft wurden, kann in einfacher Weise in der Steuereinrichtung 3 mittels dort entsprechend hinterlegter Daten ermittelt werden, welcher Anfall an Geschirr gegeben ist. Daraus ergibt sich, dass nach einer gewissen Durchlaufzeit besagtes Geschirr als Schmutzgeschirr zur Reinigung ansteht.

Die Steuereinrichtung 3 summiert das so erfasste Schmutzgeschirr auf und gibt ein (z. B. akustisches oder visuelles) Signal 4, sobald ein gewisser Prozentsatz des maximalen Ladevolumens der Geschirrspülmaschine 1 erreicht ist. Dieser Prozentsatz kann zwischen 75 % und 95 % des gesamten Ladevolumens der Maschine betragen. Mit dem Signal 4 wird das Personal darauf aufmerksam gemacht, dass es nunmehr an der optimalen Zeit ist, die Geschirrspülmaschine 1 zu aktivieren.

Durch das aktuelle Kaufverhalten der Kunden, welches über die Verkaufsdaten der Kasse ermittelt wird, kann der Verschmutzungsgrad des Geschirrs ermittelt werden und dementsprechend automatisch durch die Steuereinrichtung 3 das benötigte optimal passende Spül- bzw. Waschprogramm ausgewählt werden.

Möglich ist es aber auch, dass die Geschirrspülmaschine 1 von der Steuereinrichtung 3 direkt ein Signal zum Start erhält, sobald dieser Status erreicht ist.

Wird konsequent benutztes Geschirr in der Geschirrspülmaschine 1 platziert und der richtige Prozentsatz des gesamten Ladevolumens der Geschirrspülmaschine 1 gewählt (was in einfacher Weise empirisch ermittelt werden kann), kann die Maschine jeweils zum optimalen Zeitpunkt betrieben werden, sodass ein effizientes und kostengünstiges Reinigen des Geschirrs erfolgen kann.

Nicht näher dargestellt ist, dass gegebenenfalls bereits vor Erreichen der eigentlichen Aktivierung der Geschirrspülmaschine 1 diese aufgeheizt werden kann. In diesem Falle kann bei einem gewissen Prozentsatz des Ladevolumens der Maschine beispielsweise Wasser erhitzt werden, welches zum Spülen benötigt wird.

Dies kann allerdings in Abhängigkeit davon durch die Steuereinrichtung 3 gesteuert werden, ob der aktuelle elektrische Anschlusswert des Bistros unterhalb eines definierten Niveaus liegt, sodass der maximale elektrische Anschlusswert, der vom Gastronomiebetrieb beim Energieversorger gebucht wurde und der über die Kosten der Energie mitbestimmt, nicht überschritten wird.

Auf diese Weise können insbesondere Energiekosten reduziert werden, sodass insgesamt ein ökonomischerer Betrieb möglich ist.

### Bezugszeichenliste:

- 1: Geschirrspülmaschine
- 2: Kassensystem
- 3: Steuereinrichtung
- 4: Signal

## Patentansprüche

1. Verfahren zum Betreiben einer Geschirrspülmaschine (1) in einem Gastronomiebetrieb, wobei das Verfahren die Schritte aufweist:
a) Erfassung der im Gastronomiebetrieb verkauften Positionen über ein Kassensystem (2);
b) Zuordnung des für die verkauften Positionen erforderlichen Geschirrs;
c) Aktivierung der Geschirrspülmaschine (1) mittels einer Steuereinrichtung (3), sobald sich ab einem Referenzzeitpunkt infolge der verkauften Positionen und des damit verbundenen Anfalls an Geschirr eine vorgegebene Menge an Geschirr ergeben hat.

2. Verfahren nach Anspruch 1, wobei die Aktivierung der Geschirrspülmaschine (1) gemäß Schritt c) von Anspruch 1 die Auslösung eines Signals (4) umfasst.

3. Verfahren nach Anspruch 1, wobei die Aktivierung der Geschirrspülmaschine (1) gemäß Schritt c) von Anspruch 1 die Auslösung des Starts der Geschirrspülmaschine (1) umfasst.

4. Verfahren nach einem der Ansprüche 1 bis 3, wobei die Aktivierung der Geschirrspülmaschine (1) gemäß Schritt c) von Anspruch 1 die Unterschritte umfasst:
c1) Aufheizen der Geschirrspülmaschine (1) vor dem Start der Geschirrspülmaschine (1), sobald ein vorgegebener Prozentsatz der vorgegebenen Menge an Geschirr erreicht ist;
c2) Aktivierung der Geschirrspülmaschine (1) nach Schritt c) von Anspruch 1.

5. Verfahren nach Anspruch 4, wobei der vorgegebene Prozentsatz zwischen 75 % und 95 % der vorgegebenen Menge an Geschirr liegt.

6. Verfahren nach Anspruch 4 oder 5, wobei die Durchführung des Schritts c1 von Anspruch 4 nur erfolgt, falls die vom Gastronomiebetrieb abgerufene elektrische Leistung unterhalb eines vorgegebenen Niveaus liegt.

7. Verfahren nach einem der Ansprüche 1 bis 6, wobei die Aktivierung der Geschirrspülmaschine (1) gemäß Schritt c) von Anspruch 1 die Auswahl und Vorgabe eines definierten Spülprogramms umfasst.

8. Verfahren nach Anspruch 7, wobei das Spülprogramm von der Steuereinrichtung (3) ausgewählt wird, wobei das erfasste zu spülende Geschirr zugrunde gelegt wird.

## Claims

1. Method of operating a dishwashing machine (1) in a catering establishment, wherein the method comprises the steps:
a) Capturing the items sold in the catering establishment via a cash register system (2);
b) Allocation of the dishes required for the sold items;
c) Activation of the dishwashing machine (1) by means of a control device (3) as soon as a predetermined quantity of dishes has been produced since a reference time as a result of the items sold and the associated accumulation of dishes.

2. Method according to claim 1, wherein the activation of the dishwashing machine (1) according to step c) of claim 1 comprises triggering a signal (4).

3. Method according to claim 1, wherein the activation of the dishwashing machine (1) according to step c) of claim 1 comprises triggering the start of the dishwashing machine (1).

4. Method according to one of claims 1 to 3, wherein the activation of the dishwashing machine (1) according to step c) of claim 1 comprises the substeps of:
cl) Heating up the dishwashing machine (1) before starting the dishwashing machine (1) once a predetermined percentage of the predetermined amount of dishes is reached;
c2) Activation of the dishwashing machine (1) according to step c) of claim 1.

5. Method according to claim 4, wherein the predetermined percentage is between 75 % and 95 % of the predetermined amount of dishes.

6. Method according to claim 4 or 5, wherein performing step c1) of claim 4 is performed only if the electrical power retrieved from the catering establishment is below a predetermined level.

7. Method according to one of claims 1 to 6, wherein the activation of the dishwashing machine (1) according to step c) of claim 1 comprises selecting and presetting a defined washing program.

8. Method according to claim 7, wherein the washing program is selected by the control device (3), based on the detected dishes to be washed.

## Revendications

1. Procédé de fonctionnement d'un lave-vaisselle (1) dans un établissement de restauration, le procédé comprenant les étapes suivantes :
a) détecter des produits vendus dans l'entreprise de restauration par le biais d'un système de caisse (2) ;
b) associer la vaisselle nécessaire aux produits vendus ;
c) activer le lave-vaisselle (1) au moyen d'un dispositif de commande (3) dès l'obtention d'une quantité prédéterminée de vaisselle à partir d'un instant de référence en raison des produits vendus et de la quantité de vaisselle associée.

2. Procédé selon la revendication 1, l'activation du lave-vaisselle (1) selon l'étape c) de la revendication 1 comprenant le déclenchement d'un signal (4).

3. Procédé selon la revendication 1, l'activation du lave-vaisselle (1) selon l'étape c) de la revendication 1 comprenant le déclenchement du démarrage du lave-vaisselle (1).

4. Procédé selon l'une des revendications 1 à 3, l'activation du lave-vaisselle (1) selon l'étape c) de la revendication 1 comprenant les sous-étapes suivantes :
c1) chauffer le lave-vaisselle (1) avant de démarrer le lave-vaisselle (1) dès qu'un pourcentage prédéterminé de la quantité prédéterminée de vaisselle est atteint ;
c2) activer le lave-vaisselle (1) selon l'étape c) de la revendication 1.

5. Procédé selon la revendication 4, le pourcentage prédéterminé étant compris entre 75 % et 95 % de la quantité prédéterminée de vaisselle.

6. Procédé selon la revendication 4 ou 5, l'étape c1) de la revendication 4 n'étant réalisée que si la puissance électrique demandée par l'établissement de restauration est inférieure à un niveau prédéterminé.

7. Procédé selon l'une des revendications 1 à 6, l'activation du lave-vaisselle (1) selon l'étape c) de la revendication 1 comprenant la sélection et la spécification d'un programme de lavage défini.

8. Procédé selon la revendication 7, le programme de lavage étant sélectionné par le dispositif de commande (3), la vaisselle à laver qui a été détectée étant utilisée comme base.
